# FASCICULE DE BREVET EUROPEEN

(11) **EP 3 898 755 B1**
(45) Date de publication et mention de la délivrance du brevet: **01.11.2023**
(21) Numéro de dépôt: 19845768.1
(22) Date de dépôt: 17.12.2019
(51) Int. Cl.: C08G 59/17, C08L 63/10

(54) **COMPOSITION DE RESINE COMPRENANT UN AGENT DE RETICULATION SPECIFIQUE**
HARZZUSAMMENSETZUNG MIT EINEM SPEZIFISCHEN VERNETZUNGSMITTEL
RESIN COMPOSITION COMPRISING A SPECIFIC CROSSLINKING AGENT

(30) Priorité: 18.12.2018 FR 1873157; 31.01.2019 FR 1900926
(43) Date de publication de la demande: 27.10.2021
(73) Titulaire: COMPAGNIE GENERALE DES ETABLISSEMENTS MICHELIN, 63000 Clermont-Ferrand (FR)
(72) Inventeur: PATAUT, Gaël, 63040 CLERMONT-FERRAND Cedex 9 (FR); DOISNEAU, David, 63040 CLERMONT-FERRAND Cedex 9 (FR); LUIZ, Laura, 63040 CLERMONT-FERRAND Cedex 9 (FR); LETESSIER, Julien, 63040 CLERMONT-FERRAND Cedex 9 (FR)
(74) Mandataire: Louret, Sylvain
(86) Numéro de dépôt international: PCT/FR2019/053105
(87) Numéro de publication internationale: WO 2020/128289

(56) Documents cités:
- JP-A- 2003 342 332
- JP-A- 2003 342 333
- US-A1- 2016 318 342

## Description

### Domaine technique de l'invention

La présente invention est relative au domaine des pneumatiques comprenant des compositions de résines ou des composites.

### Art antérieur

Les concepteurs de bandages sont depuis longtemps à la recherche de « renforts » (éléments de renforcement longilignes) du type textile ou composite, à faible densité, pouvant se substituer avantageusement et efficacement aux fils ou câbles métalliques conventionnels, en vue de réduire notamment le poids de ces bandages et aussi de pallier les éventuels problèmes de corrosion.

Ainsi, le brevet EP 1 167 080 (ou US 7 032 637) a déjà décrit un renfort composite à base de monobrins de type composite Verre-Résine (abrégé « CVR ») à hautes propriétés mécaniques, comportant des fibres de verre continues, unidirectionnelles, imprégnées dans une résine réticulée du type vinylester. Ce monobrin en CVR présente, outre une contrainte de rupture en compression élevée, supérieure à sa contrainte de rupture en extension, un allongement à la rupture de l'ordre de 3,0 à 3,5%.

Le document FR 3 031 757 décrit pour sa part un renfort multi-composite comportant un ou plusieurs monobrins CVR présentant des propriétés mécaniques améliorées, avec un allongement à la rupture supérieur à 4%. Ce document décrit l'utilisation d'une composition de résine époxyvinylester, comprenant également un photo-initiateur de type phosphine et un agent réticulant, le tris(2-hydroxy éthyl)isocyanate triacrylate.

Grâce aux propriétés ci-dessus, ces documents ont montré qu'il était possible de substituer à des câbles d'acier de tels monobrins CVR, disposés en particulier sous la bande de roulement en tronçons parallèles, comme nouveaux éléments de renforcement de ceintures de bandages pneumatiques, permettant d'alléger ainsi notablement la structure des pneumatiques.

L'expérience montre toutefois que les monobrins en CVR décrits dans les brevets ci-dessus peuvent être encore améliorés, en particulier pour leur utilisation dans les bandages pour véhicules.

Or, poursuivant leurs recherches, la Demanderesse a découvert que l'utilisation d'agents de réticulation particuliers permettait d'améliorer encore l'allongement à rupture et le module en flexion des compositions de résine, conférant aux composites comprenant de telles compositions des propriétés notablement améliorées par rapport à celles des composites de l'art antérieur.

**Description détaillée de l'invention** L'invention a pour objet un pneumatique tel que défini dans les revendications 1 à 13.

### Définitions

Par l'expression "composition à base de", il faut entendre une composition comportant le mélange et/ou le produit de réaction *in situ* des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Par l'expression « équivalent molaire », bien connue de l'Homme du métier, il faut entendre le quotient entre le nombre de moles du composé ou de la fonction concerné et le nombre de moles du composé ou de la fonction de référence. Ainsi, 2 équivalents molaires du composé ou de la fonction B par rapport au composé ou à la fonction A représentent 2 moles du composé ou de la fonction B lorsqu'une mole du composé ou de la fonction A est utilisée.

### Résine

La composition de résine utilisée dans l'invention comprend une résine choisie dans le groupe constitué par les résines vinylesters et les résines polyesters insaturées.

La composition de résine utilisée dans l'invention peut être réticulée (par exemple photodurcie et/ou durcie thermiquement), c'est-à-dire sous la forme d'un réseau de liaisons tridimensionnelles, ou bien non réticulée.

La résine utilisée est par définition une résine réticulable (c'est à dire, durcissable) susceptible d'être réticulée ou durcie par toute méthode connue, en particulier par un traitement thermique ou par un rayonnement UV (ou UV-visible), de préférence émettant dans un spectre allant au moins de 300 nm à 450 nm.

A titre de résine réticulable, on utilise de préférence une résine polyester ou vinylester, plus préférentiellement une résine vinylester. Par résine "polyester", on entend de manière connue une résine du type polyester insaturé. Les résines vinylester sont bien connues dans le domaine des matériaux composites.

La résine vinylester est préférentiellement du type époxyvinylester. On utilise plus préférentiellement une résine vinylester, notamment du type époxyde, qui au moins pour partie est à base (c'est-à-dire greffée sur une structure du type) novolaque et/ou bisphénolique, c'est à dire préférentiellement une résine vinylester à base novolaque, bisphénolique, ou novolaque et bisphénolique.

Une résine époxyvinylester à base novolaque répond par exemple, de manière connue, à la formule (R1) qui suit :

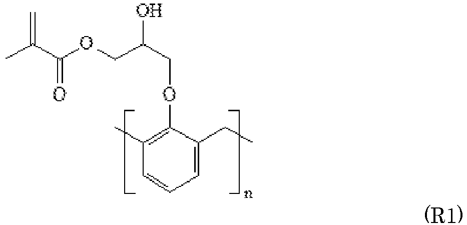

Une résine époxyvinylester à base bisphénolique A, le « A » rappelant que le produit est fabriqué à l'aide d'acétone, répond par exemple à la formule (R2) ci-dessous :

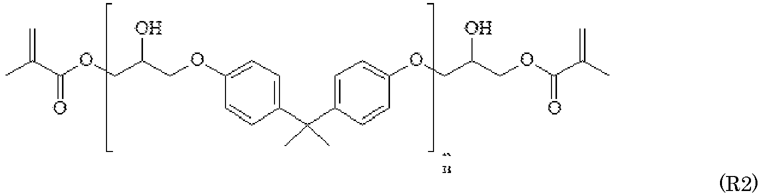

Une résine époxyvinylester de type novolaque et bisphénolique a montré d'excellents résultats.

À titre d'exemple d'une telle résine, on peut citer notamment les résines vinylester « ATLAC 590 » et « E-Nova FW 2045 » de la société Aliancys (diluées avec environ 40% de styrène en poids) décrites par exemple dans les demandes EP-A-1 074 369 et EP-A-1 174 250. Des résines époxyvinylester sont disponibles auprès d'autres fabricants tels que par exemple AOC (USA - résines « VIPEL »).

### Initiateur de réticulation

La composition de résine utilisée dans l'invention comprend un initiateur de réticulation.

Dans un arrangement particulier de l'invention, l'initiateur de réticulation est un amorceur radicalaire choisi parmi les composés halogénés, les composés comprenant un groupe azo, et les composés peroxydes. De manière préférée, l'initiateur de réticulation est un amorceur radicalaire choisi parmi l'azobisisobutyronitrile et les péroxydes, préférentiellement choisi parmi l'azobisisobutyronitrile et le péroxyde de benzoyle.

Dans un autre arrangement particulier de l'invention, l'initiateur de réticulation est un photo-initiateur sensible (c'est-à-dire réactif) aux UV au-delà de 300 nm, de préférence entre 300 et 450 nm, de préférence choisi dans le groupe des composés phosphines, des composés alpha-hydroxy-cétone, des composés benzophénones, des dérivés de thioxanthones et leur mélange.

De préférence, ce photo-initiateur est de la famille des composés phosphine, plus préférentiellement un oxyde de bis(acyl)phosphine comme par exemple l'oxyde de bis-(2,4,6-triméthylbenzoyl)-phénylphosphine ("Irgacure 819" de la société BASF par exemple) ou un oxyde de mono(acyl)phosphine (par exemple "Esacure TPO" de la société Lamberti), de tels composés phosphine pouvant être utilisés en mélange avec d'autres photo-initiateurs, par exemple des photo-initiateurs de type alpha-hydroxy-cétone tels que par exemple la diméthylhydroxy-acétophénone (e.g. « Esacure KL200 » de Lamberti) ou la 1-hydroxy-cyclohexyl-phényl-cétone (e.g. « Esacure KS300 » de Lamberti), des benzophénones telles que la 2,4,6-triméthylbenzophénone (e.g. « Esacure TZT » de Lamberti) et/ou des dérivés de thioxanthones comme par exemple l'isopropylthioxanthone (e.g. « Esacure ITX » de Lamberti). L'initiateur de réticulation est utilisé à un taux préférentiel de 0,5 à 3% poids, plus préférentiellement de 1 à 2,5% poids de la composition de résine selon l'invention.

### Agent de réticulation

La composition de résine utilisée dans l'invention comprend un agent de réticulation de formule générale (I)

R₁-X-R₂ (I)

dans laquelle :
- X est un groupe alkylène éventuellement substitué ;
- R₁ et R₂ sont indépendamment l'un de l'autre un groupe acrylate, méthacrylate, vinyle, alcényle portant un carbone insaturé en bout de chaine, ou alcynyle portant un carbone insaturé en bout de chaine.

Dans un arrangement préféré, le groupe X est substitué par au moins un groupe choisi parmi les groupes hydroxyle, éthers, alkyles et dialkylamines.

Dans un autre arrangement préféré, le groupe X n'est pas substitué.

Quel que soit l'arrangement choisi, la chaîne principale du groupe X comprend préférentiellement de 1 à 4 atomes de carbone. Par chaîne principale, on entend la chaîne d'atomes liés par liaison covalente liant le groupe R₁ au groupe R₂.

De manière préférée, R₁ et R₂ sont indépendamment choisi dans le groupe constitué par les groupes acrylate, méthacrylate, vinyle, allyle et éthynyle, préférentiellement constitué par les groupes acrylate, méthacrylate et vinyle, et très préférentiellement constitué par les groupes acrylate et méthacrylate.

De manière surprenante, l'agent de réticulation de formule générale (I) permet d'obtenir des compositions de résines présentant d'excellentes caractéristiques en terme d'allongement à rupture et de module en flexion.

### Composite

Un composite à base au moins d'une fibre et de la composition de résine exposée ci-dessus est utilisé dans le pneumatique selon l'invention.

Par fibre, on entend un élément présentant une longueur au moins 10 fois plus grande que la plus grande dimension de sa section, quelle que soit la forme de cette dernière : circulaire, elliptique, oblongue, polygonale, notamment rectangulaire ou carrée ou ovale. Dans le cas d'une section rectangulaire, la fibre présente la forme d'une bande.

De manière préférée, la fibre est réalisée en un matériau choisi parmi les matériaux organiques et inorganiques, en particulier parmi les matériaux métalliques et textiles. De manière très préférée, la fibre est réalisée en un matériau choisi parmi les polyamides aliphatiques, les polyesters, les polyamides aromatiques, la cellulose naturelle, la rayonne, le verre le quartz, le basalte, le carbone, et un métal choisi dans le groupe constitué par l'acier, le cuivre, le zinc, le laiton et les alliages de ces métaux.

Une fibre métallique peut être un monofilament élémentaire métallique. Un tel monofilament élémentaire métallique comprend une âme en acier, éventuellement revêtue d'une ou plusieurs couches d'un revêtement qui peut comprendre un métal choisi parmi le zinc, le cuivre, l'étain, le cobalt et les alliages de ces métaux.

Une fibre métallique peut être un assemblage de plusieurs monofilaments élémentaires métalliques tels que décrits ci-dessus, assemblés ensemble en hélice, par exemple par câblage ou retordage des monofilaments élémentaires métalliques pour former, par exemple des câbles à couches comprenant plusieurs couches concentriques de monofilaments élémentaires métalliques ou des câbles à torons, chaque toron comprenant plusieurs couches concentriques de monofilaments élémentaires métalliques.

Une fibre textile peut être un monofilament élémentaire textile. Ce monofilament élémentaire textile est obtenu, par exemple, par filage au fondu, filage en solution ou filage de gel. Chaque monofilament élémentaire textile est réalisé dans un matériau organique, notamment polymérique, ou inorganique, comme par exemple le verre, le quartz, le basalte ou le carbone. Les matériaux polymériques peuvent être du type thermoplastique, comme par exemple les polyamides aliphatiques, notamment les polyamides 6-6, et les polyesters, notamment le polyéthylène téréphthalate. Les matériaux polymériques peuvent être du type non thermoplastique, comme par exemple les polyamides aromatiques, notamment l'aramide, et la cellulose, naturelle comme artificielle, notamment la rayonne. Chaque monofilament élémentaire textile présente une section sensiblement circulaire présentant un diamètre allant par exemple de 2 µm à 100 µm.

Une fibre textile peut être un assemblage de plusieurs monofilaments élémentaires textiles tels que définis ci-dessus, également appelé brin. Un brin comprend de préférence plus de 10 monofilaments élémentaires textiles, de préférence plus de 100 monofilaments élémentaires textiles et plus préférentiellement plus de 500 monofilaments élémentaires textiles.

Une fibre textile peut également être un assemblage de plusieurs brins tels que définis ci-dessus.

Ladite fibre textile est préférentiellement de type polyester, polyamide, verre, carbone, quartz ou basalte. De manière très préférée la fibre est de type verre et le composite utilisé dans l'invention est un composite verre-résine (CVR).

Ladite fibre textile est préférentiellement revêtue d'une ou plusieurs couches d'un agent de liaison, couramment appelé ensimage, adapté à la composition de résine utilisée dans l'invention.

Dans un arrangement préféré, le composite comprend plusieurs fibres agencées côte à côte selon une direction principale, les fibres étant sensiblement parallèles entre elles.

Dans un autre arrangement préféré, le composite comprend plusieurs fibres assemblées en tricot ou en tissus.

Par tricot, on entend un assemblage de fibres telles que définis ci-dessus et comprenant des mailles formées par une ou plusieurs de ces fibres. Chaque maille comprend une boucle entrelacée avec une autre boucle. On peut mentionner par exemple les tricots de contexture jersey ou à côte anglaise pour les tricots à mailles cueillies et les tricots de contexture charmeuse ou atlas pour les tricots à mailles jetées.

Par tissu, on entend un assemblage d'une première famille de fibres, appelée fibres de chaine, sensiblement parallèles entre elles, et d'une deuxième famille de fibres, appelée fibres de trame, sensiblement parallèles entre elles. De préférence, les fibres de la première famille sont sensiblement perpendiculaires aux fibres de la deuxième famille.

Le composite utilisé dans l'invention peut être non réticulé, partiellement réticulé, ou réticulé.

Le composite est réticulé après mise en contact de ladite au moins une fibre avec la composition de résine selon l'invention.

Le composite utilisé dans l'invention est tout particulièrement utilisable comme élément de renforcement dans des armatures de sommet (ou ceintures) ou dans les armatures de carcasse de bandages pneumatiques, tels que décrits notamment dans les documents EP 1 167 080 (ou US 7 032 637) et WO 2012/115615.

Le composite utilisé dans l'invention est aussi utilisable, en raison de sa faible densité et de ses propriétés d'allongement à rupture et de module de flexion améliorées, comme élément de renforcement dans les bandages ou roues flexibles du type non pneumatiques, c'est-à-dire supportés structurellement (sans pression interne). De tels bandages sont bien connus de l'homme du métier (voir par exemple EP 1 242 254 ou US 6 769 465, EP 1 359 028 ou US 6 994 135, EP 1 242 254 ou US 6 769 465), US 7 201 194, WO 00/37269 ou US 6 640 859, WO 2007/085414, WO 2008/080535, WO 2009/033620, WO 2009/135561, WO 2012/032000) ; lorsqu'il est associé à tout élément mécanique rigide destiné à assurer la liaison entre le bandage flexible et le moyeu d'une roue, il remplace l'ensemble constitué par le bandage pneumatique, la jante et le disque tels qu'on les connaît sur la plupart des véhicules routiers actuels.

Le composite utilisé dans l'invention est particulièrement utilisable comme élément de renforcement essentiellement inextensible des membranes utilisées dans la bande annulaire (ou bande de cisaillement) d'un bandage non pneumatique tel que décrit par exemple dans le brevet US 7 201 194, un tel bandage ayant pour caractéristique de comporter une bande annulaire qui supporte la charge sur le bandage et une pluralité d'éléments de support ou rayons, à très faible rigidité de compression, qui travaillent en tension pour transmettre les efforts entre la bande annulaire et le moyeu de la roue.

### Article fini ou semi-fini

Un article fini ou semi fini comprenant un composite ou une composition décrits ci-dessus enrobée d'une matrice de composition de caoutchouc est divulgué.

Ladite matrice de composition de caoutchouc est à base d'au moins un élastomère, diénique ou non diénique (par exemple thermoplastique). Il s'agit de préférence d'une composition du type réticulée ou réticulable c'est-à-dire qu'elle comprend alors un système de réticulation (notamment un système de vulcanisation) adapté pour permettre la réticulation (durcissement) de la composition lors de sa cuisson (ou cuisson de l'article en caoutchouc tel qu'un pneumatique).

De préférence, l'élastomère est un élastomère diénique. De manière connue, les élastomères diéniques peuvent être classés dans deux catégories : "essentiellement insaturés" ou "essentiellement saturés". On entend par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Bien qu'elle soit applicable à tout type d'élastomère diénique, la présente invention est préférentiellement mise en oeuvre avec un élastomère diénique du type fortement insaturé.

Cet élastomère diénique est plus préférentiellement choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères, de tels copolymères étant notamment choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

La composition de caoutchouc peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères. La composition de caoutchouc peut comporter également tout ou partie des additifs connus de l'homme de l'art et habituellement utilisés dans les compositions de caoutchouc destinées à la fabrication de pneumatiques, tels que par exemple des charges renforçantes comme le noir de carbone ou la silice, des agents de couplage, des charges non-renforçantes, des plastifiants (huiles plastifiantes et/ou résines plastifiantes), des pigments, des agents de protection tels que cires anti-ozone, anti-ozonants chimiques, anti-oxydants, des agents anti-fatigue, un système de réticulation, par exemple à base de soufre et autres agents de vulcanisation, et/ou de peroxyde et/ou de bismaléimide.

Grâce à l'invention, comparativement aux compositions de caoutchouc renforcées de câbles d'acier, la matrice de composition de caoutchouc de l'article fini ou semi-fini peut être avantageusement dépourvue de sel métallique tel qu'un sel de cobalt. L'adhésion entre le composite et la couche de composition de caoutchouc qui l'enrobe peut être assurée de manière simple et connue, par exemple par une colle usuelle du type RFL (résorcinol-formol-latex), ou à l'aide de colles plus récentes telles que décrites par exemple dans les demandes WO 2013/017421, WO 2013/017422, WO 2013/017423.

### Pneumatique

L'invention a pour objet un pneumatique comprenant un composite, ou une composition.

Le composite utilisé dans l'invention est utilisable pour le renforcement de bandages, pneumatiques ou non pneumatiques, de tous types de véhicules, en particulier de véhicules tourisme ou véhicules industriels tels que Poids-lourd, Génie civil, avions, autres véhicules de transport ou de manutention.

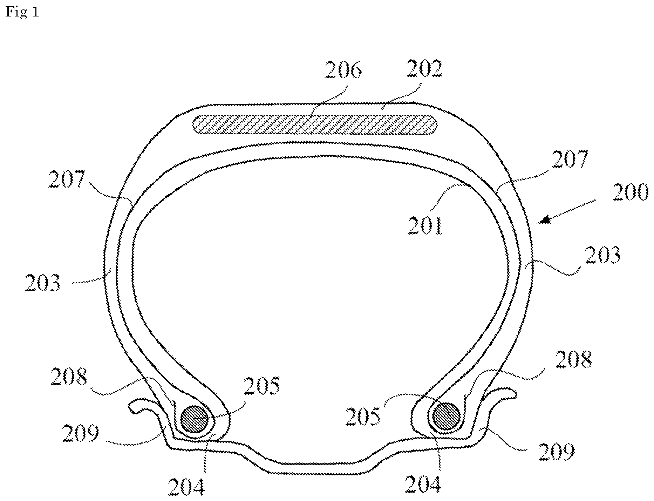

[Fig 1] A titre d'exemple, la figure 1 représente de manière très schématique (sans respect d'une échelle spécifique), une coupe radiale d'un bandage pneumatique, conforme ou non à l'invention dans cette représentation générale.

Ce bandage pneumatique 200 comporte un sommet 202 renforcé par une armature de sommet ou ceinture 206, deux flancs 203 et deux bourrelets 204, chacun de ces bourrelets 204 étant renforcé avec une tringle 205. Le sommet 202 est surmonté d'une bande de roulement non représentée sur cette figure schématique. Une armature de carcasse 207 est enroulée autour des deux tringles 205 dans chaque bourrelet 204, le retournement 208 de cette armature 207 étant par exemple disposé vers l'extérieur du pneumatique 200 qui est ici représenté monté sur sa jante 209. Bien entendu, ce bandage pneumatique 200 comporte en outre de manière connue une couche de gomme 201, communément appelée gomme ou couche d'étanchéité, qui définit la face radialement interne du bandage et qui est destinée à protéger la nappe de carcasse de la diffusion d'air provenant de l'espace intérieur au bandage pneumatique.

L'armature de carcasse 207, dans les bandages de l'art antérieur, est généralement constituée d'au moins une nappe de caoutchouc renforcée par des renforts textiles ou métalliques dits "radiaux", c'est-à-dire que ces renforts sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 204 et passe par le milieu de l'armature de sommet 206).

La ceinture 206 est par exemple constituée, dans les bandages de l'art antérieur, par au moins deux nappes de caoutchouc dites "nappes de travail" ou "nappes de triangulation", superposées et croisées, renforcées de câbles métalliques disposés sensiblement parallèlement les uns par rapport aux autres et inclinés par rapport au plan circonférentiel médian, ces nappes de travail pouvant être associées ou non à d'autres nappes et/ou tissus de caoutchouc. Ces nappes de travail ont pour fonction première de donner au bandage pneumatique une rigidité de dérive élevée. La ceinture 206 peut comporter en outre dans cet exemple une nappe de caoutchouc dite "nappe de frettage" renforcée par des fils de renforcement dits "circonférentiels", c'est-à-dire que ces fils de renforcement sont disposés pratiquement parallèles les uns aux autres et s'étendent sensiblement circonférentiellement autour du bandage pneumatique de manière à former un angle préférentiellement compris dans un domaine de 0 à 10° avec le plan circonférentiel médian. Ces fils de renforcement circonférentiels ont notamment pour fonction de résister à la centrifugation du sommet à haute vitesse.

Un bandage pneumatique 200, lorsqu'il est conforme à l'invention, a pour caractéristique préférentielle qu'au moins sa ceinture (206) et/ou son armature de carcasse (207) comporte un composite utilisé dans l'invention, disposé entre et au contact de deux couches de composition de caoutchouc. Selon un mode de réalisation particulier de l'invention, le composite peut être utilisé sous la forme de tronçons parallèles disposés sous la bande de roulement, comme décrit dans le brevet EP 1 167 080. Selon un autre exemple de réalisation possible de l'invention, c'est la zone bourrelet qui peut être renforcée d'un tel renfort multi-composite ; ce sont par exemple les tringles (205) qui pourraient être constituées, en tout ou partie, du renfort multi-composite.

### Procédé

Les compositions de résine utilisées dans l'invention sont réalisées de la manière suivante : on introduit la résine dans une cuve agitée et chauffée à une température comprise entre 30 et 100°C. La température à laquelle est maintenue la cuve est fonction de l'agent de réticulation choisi et permet sa complète solubilisation. L'agent de réticulation de formule générale (I) décrit dans la présente invention a pour avantage d'être soluble à faible température. Ainsi, préférentiellement, la cuve sera chauffée à une température inférieure à 100°C, de manière préférée inférieure à 80°C, et de manière très préférée inférieure à 60°C. L'agent de réticulation est progressivement ajouté jusqu'à solubilisation complète. L'initiateur de réticulation est ensuite ajouté à l'abri de la lumière en maintenant la température de l'ensemble. L'agitation est maintenue jusqu'à complète solubilisation de l'ensemble des espèces.

Les composites utilisés dans l'invention peuvent être préparés selon un procédé comportant les étapes principales suivantes :
- réaliser un arrangement rectiligne de fibres et entraîner cet arrangement dans une direction d'avancement ;
- dans une chambre à vide, dégazer l'arrangement de fibres par l'action du vide ;
- en sortie de la chambre à vide, après dégazage, traverser une chambre d'imprégnation sous vide de manière à imprégner ledit arrangement de fibres par la composition de résine selon l'invention, à l'état liquide, pour obtenir un imprégné contenant les fibres et la composition de résine ;
- dans une chambre d'irradiation UV, polymériser la résine sous l'action des UV ;
- puis enrouler pour stockage le composite ainsi obtenu.

Toutes les étapes ci-dessus (arrangement, dégazage, imprégnation, polymérisation et enroulage final) sont des étapes connues de l'homme du métier ; elles ont par exemple été décrites dans les demandes EP 1 074 369 et EP 1 174 250.

Une étape de traitement thermique (cuisson), peut être conduite avant l'enroulage pour stockage de manière à finaliser, le cas échéant, la réticulation du composite. Cette étape peut être menée conjointement à une mise sous pression du composite, notamment lorsque plusieurs composites sont assemblés pour former un stratifié.

On rappellera notamment qu'avant toute imprégnation des fibres doit être conduite une étape essentielle de dégazage de l'arrangement de fibres par l'action du vide, afin notamment de renforcer l'efficacité de l'imprégnation ultérieure et surtout de garantir l'absence de bulles à l'intérieur du composite final.

Après traversée de la chambre à vide, les fibres entrent dans une chambre d'imprégnation qui est totalement emplie de résine d'imprégnation, donc dépourvue d'air : c'est en ce sens qu'on peut qualifier cette étape d'imprégnation d'« imprégnation sous vide ».

La chambre de polymérisation ou d'irradiation UV a ensuite pour fonction de polymériser, réticuler la résine sous l'action des UV. Elle comporte un ou de préférence plusieurs irradiateurs UV, constitué(s) par exemple chacun par une lampe UV de longueur d'onde de 200 à 600 nm, préférentiellement de 300 à 600 nm et plus préférentiellement de 300 à 450 nm.

Le composite ainsi formé à travers la chambre d'irradiation UV, dans lequel la résine est maintenant à l'état solide, est ensuite récolté par exemple sur une bobine de réception sur laquelle il peut être enroulé sur une très grande longueur.

### Méthodes de mesure

Les propriétés mécaniques de module en flexion et d'allongement à la rupture sont mesurées de manière connue à l'aide d'une machine de traction « INSTRON » du type 4466 (logiciel BLUEHILL-2 fourni avec la machine de traction), selon la norme ISO14125 :1998-06 avec les modifications suivantes : l'épaisseur de l'éprouvette est de 2 mm au lieu des 4 mm prévus par la norme, et le module en flexion est déterminé à 0,75% de déformation au lieu des 0,05% de déformation prévues dans la norme. Les mesures sont réalisées sur des renforts multi-composites bruts de fabrication c'est-à-dire non encollés, ou bien encollés (c'est-à-dire prêts à l'emploi), ou encore extraits du produit semi-fini ou de l'article en caoutchouc qu'ils renforcent. Avant mesure, ces renforts multi-composites sont soumis à un conditionnement préalable (stockage pendant au moins 24 h dans une atmosphère standard selon la norme européenne DIN EN 20139 (température de 23 ± 2°C ; hygrométrie de 50 ± 5 %). Tous les résultats donnés sont une moyenne de 10 mesures.

Les exemples qui suivent permettent d'illustrer l'invention sans la limiter.

### Exemples

### Préparation des compositions

On procède pour la préparation de chaque composition listée dans le tableau I de la manière suivante : on introduit la résine dans une cuve équipée d'un agitateur magnétique et dont la température est maintenue à 80°C. L'additif est progressivement ajouté jusqu'à solubilisation complète. L'initiateur de réticulation est ensuite ajouté à l'abri de la lumière en maintenant la température de l'ensemble à 80°C. L'agitation est maintenue jusqu'à complète solubilisation de l'ensemble des espèces.

La composition témoin T1 comprend uniquement de la résine vinylester acrylate « Atlac 590 » et un photoinitiateur « Irgacure 819 ». La composition témoin T2, conforme à l'enseignement du document FR 3 031 757 comprend en outre un agent réticulant, le tris(2-hydroxyethyl)isocyanurate triacrylate (« SR 368 » de la société Sartomer).

**[Tableau 1]**

| Compositions en %poids | T1 | T2 | C1 | C2 |
|---|---|---|---|---|
| Résine vinylester acrylate (1) | 98,5 | 83,5 | 89,6 | 88,9 |
| Photoinitiateur | 1,5 | 1,5 | 1,5 | 1,5 |
| (2) | | | | |
| Additif 1 (3) | - | 15,0 | - | - |
| Additif 2 (4) | - | - | 8,9 | - |
| Additif 3 (5) | - | - | - | 9,6 |
| Équivalent molaire acrylate additif/acrylate résine | - | 0,3 | 0,3 | 0,3 |

| | | | | |
|---|---|---|---|---|
| (1) « Atlac 590 » fournie par la société Aliancys (2) « Irgacure 819 » de la société Sartomer (3) tris(2-hydroxyethyl)isocyanurate triacrylate « SR 368 de la société Sartomer (4) 2-allyloxyethyl acrylate (CAS 7784-80-7) (5) 4-vinyloxybutyl acrylate (CAS 162633-53-6) | | | | |

### Préparation des éprouvettes

Un coupon de tissu de verre d'armure sergé 2/2 et de masse surfacique 300 g/m² (comme par exemple le tissu de verre 300g/m² sergé 2/2, référence 3300, de la société Sicomin) est imprégné à une température de 80°C avec la composition à tester. La dimension de ce coupon est de 20x30 cm. Chaque face du tissu imprégné est recouverte d'un film de mylar (PET).

Un « pré-composite » est réalisé en effectuant une première photopolymérisation simultanée des deux faces du tissu imprégné par exposition pendant le nombre de secondes indiquées dans le tableau II sous rayonnement ultra-violet (longueur d'onde moyenne de 365 nm) émis par un ensemble de tubes d'une puissance totale de 800W placés à une distance de 18 cm de part et d'autre du pré-composite. L'épaisseur du pré-composite est d'environ 0,3 mm. Le temps d'exposition est ajusté par essai-erreur de manière à obtenir un pré-composite suffisamment rigide pour pouvoir être manipulé et découpé, mais conservant suffisamment de « collant » et de malléabilité pour que les plaquettes puissent tenir assemblées après mise en contact et que les bulles d'air puissent s'échapper. Le pré-composite comprend 60% en poids de fibres et 40% en poids de composition de résine (à plus ou moins 1%).

**[Tableau 2]**

| | Temps d'exposition UV (secondes) |
|---|---|
| T1 | 20 |
| T2 | 20 |
| C1 | 14 |
| C2 | 25 |

### Temps de photopolymérisation en fonction de la composition

Le pré-composite est ensuite découpé en 12 plaquettes de 45x80 mm. Six plaques de pré-composites sont empilées après avoir retiré le film protecteur de mylar en veillant à leur alignement, c'est-à-dire à ce que les fils de chaîne du tissu de chaque plaque soient parallèles aux fils de chaînes des tissus des plaques adjacentes.

L'empilement est placé dans une presse chauffante réglée à 200°C, sous une pression de 30 MPa pendant 15 minutes afin d'obtenir l'éprouvette réticulée.

L'éprouvette réticulée est découpée en éprouvettes de tests de dimensions 80x15 mm afin de réaliser les mesures dont les résultats sont présentés ci-après.

Les éprouvettes sont utilisées pour mesurer les propriétés d'allongement à rupture et de module en flexion.

Les résultats de mesures sont indiqués dans le tableau 3.

**[Tableau 3]**

| | T1 | T2 | C1 | C2 |
|---|---|---|---|---|
| Allongement à rupture (%) | 100 | 92 | 106 | 111 |
| Module en flexion à 0,75% (MPa) | 100 | 107 | 116 | 107 |

### Résultats des mesures de module de flexion et d'allongement à rupture

On observe que les composites C1 et C2 présentent à la fois une amélioration de l'allongement à rupture et du module en flexion, aussi bien par rapport au témoin T1 que par rapport au témoin T2.

## Revendications

1. Pneumatique comprenant une composition de résine à base de :
- une résine choisie dans le groupe constitué par les résines vinylesters et les résines polyesters insaturées,
- un initiateur de réticulation et
- un agent de réticulation de formule générale (I)
R₁-X-R₂ (I)
dans laquelle :
- X est un groupe alkylène éventuellement substitué ;
- R₁ et R₂ sont indépendamment l'un de l'autre un groupe acrylate, méthacrylate, vinyle, alcényle portant un carbone insaturé en bout de chaine, ou alcynyle portant un carbone insaturé en bout de chaine.

2. Pneumatique selon la revendication 1 dans lequel la résine est choisie dans le groupe constitué par les résines vinylesters.

3. Pneumatique selon la revendication précédente dans lequel la résine est une résine époxyvinylester à base novolaque, bisphénolique, ou novolaque et bisphénolique.

4. Pneumatique selon la revendication 1 dans lequel le groupe X est substitué par au moins un groupe choisi parmi les groupes hydroxyle, éthers, alkyles et dialkylamines.

5. Pneumatique selon la revendication 1 dans lequel le groupe X n'est pas substitué.

6. Pneumatique selon l'une quelconque des revendications précédentes dans lequel la chaîne principale du groupe X comprend de 1 à 4 atomes de carbone.

7. Pneumatique selon l'une quelconque des revendications précédentes dans lequel R₁ et R₂ sont indépendamment choisis dans le groupe constitué par les groupes acrylate, méthacrylate, vinyle, allyle et éthynyle, préférentiellement constitué par les groupes acrylate, méthacrylate et vinyle, et très préférentiellement constitué par les groupes acrylate et méthacrylate.

8. Pneumatique selon l'une quelconque des revendications précédentes dans lequel l'initiateur de réticulation est un amorceur radicalaire choisi parmi les composés halogénés, les composés comprenant un groupe azo, et les composés peroxydes.

9. Pneumatique selon la revendication précédente dans lequel l'initiateur de réticulation est choisi parmi l'azobisisobutyronitrile et les péroxydes, préférentiellement choisi parmi l'azobisisobutyronitrile et le péroxyde de benzoyle.

10. Pneumatique selon l'une quelconque des revendications 1 à 7 dans lequel l'initiateur de réticulation est un photo-initiateur sensible aux UV au-delà de 300 nm, de préférence entre 300 et 450 nm, préférentiellement choisi dans le groupe des composés phosphines, des composés alpha-hydroxy-cétone, des composés benzophénones, des dérivés de thioxanthones et leur mélange.

11. Pneumatique selon l'une quelconque des revendications précédentes dans lequel la composition de résine comprend de 0,5 à 3% poids d'initiateur de réticulation.

12. Pneumatique selon l'une quelconque des revendications précédentes dans lequel la composition de résine comprend de 2 à 15% poids, de préférence de 5 à 10% poids, d'agent de réticulation de formule générale (I).

13. Pneumatique selon l'une quelconque des revendications précédentes comprenant un composite comprenant la composition de résine et au moins une fibre.

## Patentansprüche

1. Luftreifen, der eine Harzzusammensetzung umfasst, welche auf Folgendem basiert:
- einem Harz, das aus der Gruppe ausgewählt ist, welche aus den Vinylesterharzen und den ungesättigten Polyesterharzen besteht,
- einem Vernetzungsinitiator sowie
- einem Vernetzungsmittel der allgemeinen Formel (I)
R₁-X-R₂ (I)
wobei:
- X für eine möglicherweise substituierte Alkylengruppe steht;
- R₁ und R₂ unabhängig voneinander für eine Acrylat-, Methacrylat-, Vinyl-, Alkenylgruppe, die am Kettenende mit einem ungesättigten Kohlenstoff versehen ist, oder für eine Alkinylgruppe stehen, die am Kettenende mit einem ungesättigten Kohlenstoff versehen ist.

2. Luftreifen nach Anspruch 1, wobei das Harz aus der Gruppe ausgewählt ist, die aus den Vinylesterharzen besteht.

3. Luftreifen nach dem vorhergehenden Anspruch, wobei es sich bei dem Harz und ein Epoxyvinylesterharz auf Novolak-, Bisphenol- oder Novolak- und Bisphenolbasis handelt.

4. Luftreifen nach Anspruch 1, wobei die Gruppe X mit mindestens einer Gruppe substituiert ist, die aus den Hydroxyl-, Ether-, Alkyl- und Dialkylamingruppen ausgewählt ist.

5. Luftreifen nach Anspruch 1, wobei die Gruppe X nicht substituiert ist.

6. Luftreifen nach einem beliebigen der vorhergehenden Ansprüche, wobei die Hauptkette der Gruppe X 1 bis 4 Kohlenstoffatome umfasst.

7. Luftreifen nach einem beliebigen der vorhergehenden Ansprüche, wobei R₁ und R₂ auf unabhängige Weise aus der Gruppe ausgewählt sind, die aus den Acrylat-, Methacrylat-, Vinyl-, Allyl- und Ethinylgruppen besteht, wobei sie vorzugsweise aus den Acrylat-, Methacrylat- und Vinylgruppen besteht und stärker bevorzugt aus den Acrylat- und Methacrylatgruppen besteht.

8. Luftreifen nach einem beliebigen der vorhergehenden Ansprüche, wobei es sich bei dem Vernetzungsinitiator um einen radikalischen Reaktionsstarter handelt, der aus den halogenierten Verbindungen, den Verbindungen, welche eine Azo-Gruppe umfassen, und den Peroxidverbindungen ausgewählt ist.

9. Luftreifen nach dem vorhergehenden Anspruch, wobei der Vernetzungsinitiator aus Azobisisobutyronitril und den Peroxiden ausgewählt ist, wobei er vorzugsweise aus Azobisisobutyronitril und Benzoylperoxid ausgewählt ist.

10. Luftreifen nach einem beliebigen der Ansprüche 1 bis 7, wobei es sich bei dem Vernetzungsinitiator um einen Photoinitiator handelt, der für UV-Licht jenseits von 300 nm, vorzugsweise zwischen 300 und 450 nm, empfindlich ist, wobei er vorzugsweise aus der Gruppe der Phosphinverbindungen, der alpha-Hydroxyketonverbindungen, der Benzophenonverbindungen, der Thioxanthonderivate und deren Mischung ausgewählt ist.

11. Luftreifen nach einem beliebigen der vorhergehenden Ansprüche, wobei die Harzzusammensetzung 0,5 bis 3 Gewichts-% an Vernetzungsinitiator umfasst.

12. Luftreifen nach einem beliebigen der vorhergehenden Ansprüche, wobei die Harzzusammensetzung 2 bis 15 Gewichts-%, vorzugsweise 5 bis 10 Gewichts-%, an Vernetzungsmittel nach der allgemeinen Formel (I) umfasst.

13. Luftreifen nach einem beliebigen der vorhergehenden Ansprüche, der einen Verbundwerkstoff umfasst, welcher die Harzzusammensetzung und mindestens eine Faser umfasst.

## Claims

1. Tyre comprising a resin composition based on:
- a resin selected from the group consisting of vinyl ester resins and unsaturated polyester resins,
- a crosslinking initiator and
- a crosslinking agent of general formula (I)
R₁ - X - R₂ (I)
in which:
- X is an optionally substituted alkylene group;
- R₁ and R₂ are, independently of one another, an acrylate group, methacrylate group, vinyl group, alkenyl group bearing an unsaturated carbon at the chain end, or alkynyl group bearing an unsaturated carbon at the chain end.

2. Tyre according to Claim 1, in which the resin is selected from the group consisting of vinyl ester resins.

3. Tyre according to the preceding claim, in which the resin is an epoxy vinyl ester resin based on novolac, bisphenol, or novolac and bisphenol.

4. Tyre according to Claim 1, in which the X group is substituted by at least one group selected from hydroxyl, ether, alkyl and dialkylamine groups.

5. Tyre according to Claim 1, in which the X group is not substituted.

6. Tyre according to any one of the preceding claims, in which the main chain of the X group comprises from 1 to 4 carbon atoms.

7. Tyre according to any one of the preceding claims, in which R₁ and R₂ are independently selected from the group consisting of acrylate, methacrylate, vinyl, allyl and ethynyl groups, preferentially consisting of acrylate, methacrylate and vinyl groups, and very preferentially consisting of acrylate and methacrylate groups.

8. Tyre according to any one of the preceding claims, in which the crosslinking initiator is a radical initiator selected from halogenated compounds, compounds comprising an azo group, and peroxide compounds.

9. Tyre according to the preceding claim, in which the crosslinking initiator is selected from azobisisobutyronitrile and peroxides, preferentially selected from azobisisobutyronitrile and benzoyl peroxide.

10. Tyre according to any one of Claims 1 to 7, in which the crosslinking initiator is a photoinitiator sensitive to UV above 300 nm, preferably between 300 and 450 nm, preferentially selected from the group of phosphine compounds, alpha-hydroxy ketone compounds, benzophenone compounds, thioxanthone derivatives and a mixture thereof.

11. Tyre according to any one of the preceding claims, in which the resin composition comprises from 0.5% to 3% by weight of crosslinking initiator.

12. Tyre according to any one of the preceding claims, in which the resin composition comprises from 2% to 15% by weight, preferably from 5% to 10% by weight, of crosslinking agent of general formula (I).

13. Tyre according to any one of the preceding claims, comprising a composite comprising the resin composition and at least one fibre.
